# EUROPEAN PATENT APPLICATION

(11) **EP 4 243 465 A1**
(43) Date of publication of application: **13.09.2023**
(21) Application number: 20960842.1
(22) Date of filing: 06.11.2020
(51) Int. Cl.: H04W 8/02, H04W 8/24, H04W 36/14, H04W 48/08, H04W 48/16, H04W 48/18

(54) **TERMINAL AND COMMUNICATION SYSTEM**

(71) Applicant: NTT DOCOMO, INC., Tokyo 100-6150 (JP)
(72) Inventor: ISHIKAWA, Hiroshi, Tokyo 100-6150 (JP); MINOKUCHI, Atsushi, Tokyo 100-6150 (JP); TANAKA, Itsuma, Tokyo 100-6150 (JP); HIKOSAKA, Maoki, Tokyo 100-6150 (JP); KAWAKAMI, Yosuke, Tokyo 100-6150 (JP); ZHAO, Yue, Tokyo 100-6150 (JP); SHIBUTANI, Marina, Tokyo 100-6150 (JP)
(74) Representative: Hoffmann Eitle
(86) International application number: PCT/JP2020/041631
(87) International publication number: WO 2022/097290

(57) **Abstract**

A terminal includes a reception unit configured to receive, from a first network node in a VPLMN (Visited Public land mobile network), signaling related to SoR including at least information indicating a prioritized PLMN and information indicating a trigger of a PLMN selection; and a control unit configured to perform the PLMN selection, based on the information indicating the prioritized PLMN and the information indicating the trigger of the PLMN selection. The signaling related to SoR is generated by a second network node in a HPLMN (Home Public land mobile network).

## Description

### [FIELD OF THE INVENTION]

The present invention relates to a terminal and a communication system.

### [BACKGROUND OF THE INVENTION]

In 3GPP (3rd Generation Partnership Project), in order to achieve further larger system capacity, further faster data transmission speed, further lower latency in a wireless communication section, etc., a wireless communication method called 5G or NR (New Radio) has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g. , non-patent document 1).

### [Citation List]

### [Non-Patent Document]

[Non-Patent Document 1] 3GPP TS 23.501 V16. 5. 1 (2020-08)

### SUMMARY OF THE INVENTION

### [TECHNICAL PROBLEM]

In NR, when a user device is connected to a network under the roaming environment, in a case where SoR (Steering of Roaming) information related to control for prioritized PLMN (Public land mobile network) selection is acquired by the user device, it is difficult to control timing at which the PLMN selection is to be performed.

The present invention has been made in view of the above, and aims to control the trigger of the network selection or the network to be selected for a user device in a roaming environment.

### [SOLUTION TO PROBLEM]

According to the disclosed technique, a terminal is provided. The terminal includes: a reception unit configured to receive, from a first network node in a VPLMN (Visited Public land mobile network), signaling related to SoR including at least information indicating a prioritized PLMN and information indicating a trigger of a PLMN selection; and a control unit configured to perform the PLMN selection, based on the information indicating the prioritized PLMN and the information indicating the trigger of the PLMN selection. The signaling related to SoR is generated by a second network node in a HPLMN (Home Public land mobile network).

### [ADVANTAGEOUS EFFECTS OF INVENTION]

According to the disclosed technique, the trigger of the network selection or the network to be selected for a user device in a roaming environment, can be controlled.

### BRIEF DESCRIPTION OF THE DRAWINGS

[Fig. 1] Fig. 1 is a drawing illustrating a communication system according to an embodiment of the present invention.
[Fig. 2] Fig. 2 is a drawing illustrating an example (1) of a SoR processing method.
[Fig. 3] Fig. 3 is a drawing illustrating an example (2) of a SoR processing method.
[Fig. 4] Fig. 4 is a diagram illustrating an example (1) of a SoR processing method according to an embodiment of the present invention.
[Fig. 5] Fig. 5 is a diagram illustrating an example (2) of a SoR processing method according to an embodiment of the present invention.
[Fig. 6] Fig. 6 is a diagram illustrating an example (3-1) of a SoR processing method according to an embodiment of the present invention.
[Fig. 7] Fig. 7 is a diagram illustrating an example (3-2) of a SoR processing method according to an embodiment of the present invention.
[Fig. 8] Fig. 8 is a diagram illustrating an example (4) of a SoR processing method according to an embodiment of the present invention.
[Fig. 9] Fig. 9 is a diagram illustrating an example (5) of a SoR processing method according to an embodiment of the present invention.
[Fig. 10] Fig. 10 is a flowchart illustrating an example (6) of a SoR processing method according to an embodiment of the present invention.
[Fig. 11] Fig. 11 is a flowchart illustrating an example (7) of a SoR processing method according to an embodiment of the present invention.
[Fig. 12] Fig. 12 is a flowchart illustrating an example (8) of a SoR processing method according to an embodiment of the present invention.
[Fig. 13] Fig. 13 is a flowchart illustrating an example (9) of a SoR processing method according to an embodiment of the present invention.
[Fig. 14] Fig. 14 is a flowchart illustrating an example (10) of a SoR processing method according to an embodiment of the present invention.
[Fig. 15] Fig. 15 is drawing illustrating an example of a functional structure of a network node 10 according to an embodiment of the present invention.
[Fig. 16] Fig. 16 is drawing illustrating an example of a functional structure of a user device 20 according to an embodiment of the present invention.
[Fig. 17] Fig. 17 is a drawing illustrating an example of a hardware structure of the network node 10 or the user device 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 10 or a user apparatus 20 is configured.

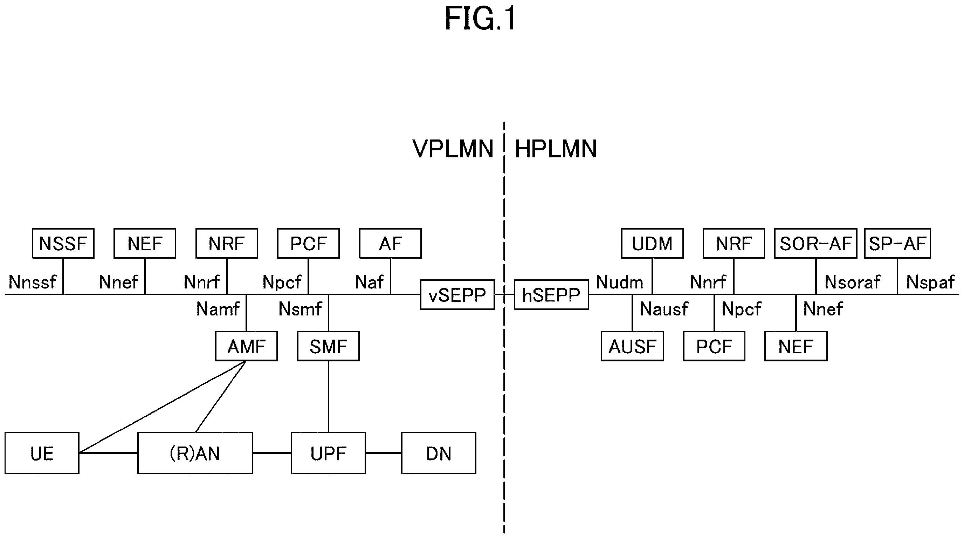

Fig. 1 is a drawing illustrating a communication system according to an embodiment of the present invention.
As illustrated in Fig. 1, the communication system includes a UE that is a user device 20, and a plurality of network nodes 10. Hereafter, one network node 10 corresponds to each function, but multiple functions may be implemented by one network node 10 or one function may be implemented by multiple network nodes 10. The "connections" described below may be either a logical connection or a physical connection.

RAN (Radio Access Network) is a network node 10 with wireless access functions, and is connected to UE, AMF (Access and Mobility Management Function) and UPF (User plane function). The AMF is a network node 10 having functions of, for example, terminating the RAN interface, terminating the NAS (Non-Access Stratum), managing registration, managing connection, managing reachability, and managing mobility. The UPF is a network node 10 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network according to an embodiment of the present invention, multiple network slices may be included.

AMF is connected to UE, RAN, SMF (Session Management Function), NSSF (Network Slice Selection Function), NEF (Network Exposure Function), NRF (Network Repository Function), AUSF (Authentication Server Function), PCF (Policy Control Function), AF (Application Function), UDM (Unified Data Management), and SEPP (Security Edge Protection Proxy). AMF, SMF, NSSF, NEF, NRF, AUSF, PCF, AF, and UDM are network nodes 10 connected to each other via interfaces Namf, Nsmf, Nnssf, Nnef, Nnrf, Nausf, Npcf, Naf, and Nudm, based on the respective services.

The SMF is a network node 10 having functions such as session management, Internet Protocol (IP) address assignment and management of UE, DHCP (Dynamic Host Configuration Protocol) function, ARP (Address Resolution Protocol) proxy, and roaming function. The NEF is a network node 10 having a function of indicating capabilities and events to other NFs (Network Functions). The NSSF is a network node 10 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 10 having a function of performing policy control of the network. AF is a network node 10 having a function of controlling an application server. UDM is a network node 10 having a function of, for example, authentication information generation, user identification, and access control during roaming based on the subscriber data. SEPP is a non-transparent proxy, and filters control plane messages between PLMNs (Public land mobile networks). vSEPP shown in Fig. 1 is a SEPP in a visited network, and hSEPP is a SEPP in a home network. In addition, UDM can obtain information required for steering via SOR-AF (Steering of Roaming application function) and Nsoraf. In addition, SOR-AF can encrypt the steering information to be indicated to UE via SP-AF (Secured Packet Application Function) and Nspaf.

As shown in Fig. 1, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example. The AMF of VPLMN.

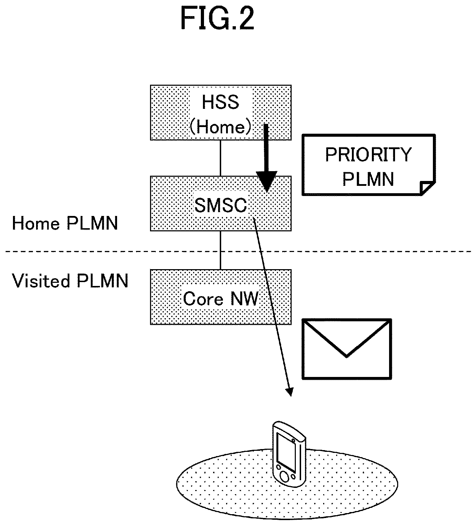

Fig. 2 is a drawing illustrating an example (1) of a SoR processing method. Fig. 2 illustrates a SoR (Steering of Roaming) function in which the PLMN to be visited is indicated to a roaming user in LTE by the home operator.

The UE selects a PLMN according to a priority PLMN list (EF_OPLMwAcT) that is recorded in USIM (Universal Subscriber Identity Module). As shown in Fig. 2, in the SoR, an SMS (Short Message Service) for rewriting the PLMN list of the USIM is transmitted from the HSS (Home Subscriber Server) to the roaming UE, and the UE receives the SMS via the SMSC (SMS Center) and the core network (Core NW), thereby controlling the PLMN to be preferentially visited.

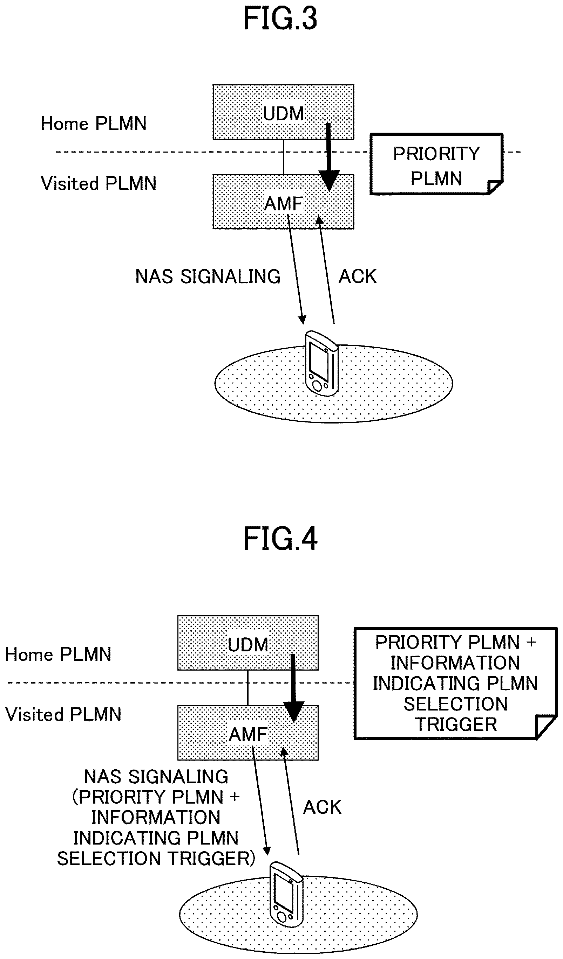

Fig. 3 is a drawing illustrating an example (2) of an SoR processing method. In the SoR processing method shown in Fig. 2, the SoR function cannot be provided for an SMS non-compliant terminal (such as a module terminal). In addition, because no response (ACK) is returned from the terminal, the network node of the transmission source cannot determine that the rewriting is completed.

Therefore, in the HPLMN and VPLMN of the 5G system as illustrated in Fig. 1, the SoR function is implemented by rewriting the PLMN list of the UE according to NAS (Non-Access Stratum) signaling. By rewriting the PLMN list according to NAS signaling, the SMS non-compliant terminal can be controlled, the UE returns the response to the network node of the transmission source, and thus, the UE can indicate, to the network, the successful rewriting completion.

As illustrated in Fig. 3, the UDM in the HPLMN transmits, to the AMF in the VPLMN, the priority PLMN as SoR information. At this time, the UDM may obtain the priority PLMN information from SOR-AF. The SOR-AF can determine the priority operator by taking into account various conditions including a current number of residing users, used amount, etc. In addition, the SOR-AF may cause the SP-AF to perform transformation to the encrypted message that can be decrypted by the UE. Subsequently, the AMF transmits the priority PLMN received from the UDM to the UE via NAS signaling. In response to the reception of the priority PLMN, the UE transmits an ACK to the AMF.

Here, in a case where the UE performs PLMN selection during the communication in response to the reception of the SoR information by the UE, the communicating call is disconnected because the network search is operated. Whether the PLMN selection should be immediately performed by disconnecting the call, or the PLMN selection should be performed by waiting until the end of the communication, depends on the UE implementation. As a result, the starting process of the PLMN selection in accordance with the communicating call type or with the policy of the operator, cannot be performed. As an example of the necessity of the starting process of the PLMN selection in accordance with the communicating call type, in a case where the communicating call type is a voice call, disconnection should be avoided because of a significant impact on the user. In addition, for example, in a case where the communicating call type is a data communication, the call should be disconnected and the user should be caused to visit an area of the priority PLMN immediately.

In addition, if the PLMN selection is performed immediately after the emergency call, a callback from the emergency call receiving agency cannot be received, and thus, starting the PLMN selection immediately after the emergency call should be avoided.

Therefore, the SoR processing method as described below will be applied.

Fig. 4 is a diagram illustrating an example (1) of a SoR processing method according to an embodiment of the present invention. When the priority PLMN list is indicated by NAS signaling, the home operator adds information indicating the trigger of the PLMN selection, and, based on the information, the UE performs the PLMN selection.

As illustrated in Fig. 4, the UDM in the HPLMN transmits, to the AMF in the VPLMN, the priority PLMN and information indicating the PLMN selection trigger as the SoR information. Subsequently, the AMF transmits the priority PLMN and the information indicating the PLMN selection trigger that are received from the UDM to the UE via the NAS signaling. In response to the reception of the priority PLMN and the information indicating the PLMN selection trigger, the UE transmits an ACK to the AMF.

The information indicating the PLMN selection trigger may be the following 1), 2), 3), for example.
1) Timer value. After receiving the SoR information, the UE performs the PLMN selection after expiration of the timer.
2) Flag that indicates whether PLMN selection during the communication is allowed or not. In a case where the flag is "allowed" , the UE disconnects the communication and performs the PLMN selection. In a case where the flag is "not allowed" , the UE waits until the end of the communication, transitions to an idle state, and then, performs the PLMN selection.
3) The timer value of 1) and the flag of 2) are configured for each of the communicating call types. Table 1 is an example of information configured for each call type and the UE operation.

**[Table 1]**

| Call type | Information | Terminal's operation |
|---|---|---|
| Voice communicating state (excluding an emergency call) | T=10 sec | Perform PLMN selection in case of an idle state after 10 seconds. |
| | Flag=0 | |
| | | Wait until entering an idle state in case of voice communicating state. |
| Emergency call communicating state | T=60 min | Perform PLMN selection in case of an idle state after 60 minutes. |
| | Flag=0 | |
| | | Wait until entering an idle state in case of emergency call communicating state. |
| Internet communicating state | T=0 sec | Immediately perform PLMN selection. |
| | Flag=1 | |
| | | (Disconnection in case of Internet communicating state) |

As shown in Table 1, with respect to the call type "voice communication state (excluding an emergency call)" , when the timer value T is configured to be 10 sec and the flag is configured to be 0, that is, the PLMN selection during communication is not allowed, the UE performs the PLMN selection if the UE is in the idle state 10 seconds after reception of the SoR information, and waits to perform the PLMN selection until the UE enters the idle state if the UE is in the voice communication state.

As shown in Table 1, with respect to the call type "emergency call communicating state" , when the timer value T is configured to be 60 min and the flag is configured to be 0, that is, the PLMN selection during communication is not allowed, the UE performs the PLMN selection if the UE is in the idle state 60 minutes after reception of the SoR information, and waits to perform the PLMN selection until the UE enters the idle state if the UE is in the emergency call communicating state. In addition, as another example, in a case where the SoR information is received for the call type "emergency call communicating state" , the UE may start a timer at the end of the emergency call. In other words, the UE may perform the PLMN selection if the UE is in the idle state at the time of expiration of the timer 60 minutes after the time of the end of the emergency call.

As shown in Table 1, with respect to the call type "Internet communicating state" , when the timer value T is configured to be 0 sec and the flag is configured to be 1, that is, the PLMN selection during communication is allowed, the UE immediately performs the PLMN selection in response to reception of the SoR information. At this time, the communication is disconnected if the UE is in the Internet communicating state.

Note that the above-described timer value of 1) may be configured, and the flag is not required to be configured. In a case where the UE is in the communicating state when the timer expires, the communication may be disconnected and the PLMN selection may be performed, without exception. In addition, the terminal may wait to perform the PLMN selection until the terminal enters the idle state, or the terminal may be implemented to determine which operation is to be performed for each call type.

Note that the above-described flag of 2) may be configured, and the timer is not required to be configured. The UE immediately performs the PLMN selection in a case where the UE is not in the communicating state in response to reception of the SoR information. The UE immediately performs the PLMN selection or waits to perform the PLMN selection until the end of the communication, based on the flag, in a case where the UE is in the communicating state in response to reception of the SoR information.

Note that the call type may be other than the call types illustrated in Table 1. For example, the call type may be SMS. In addition, for example, the call type may be defined for each application of the Internet communication. In addition, for example, the call type may be defined for each APN (Access Point Name) or DNN (Data Network Name) to be connected.

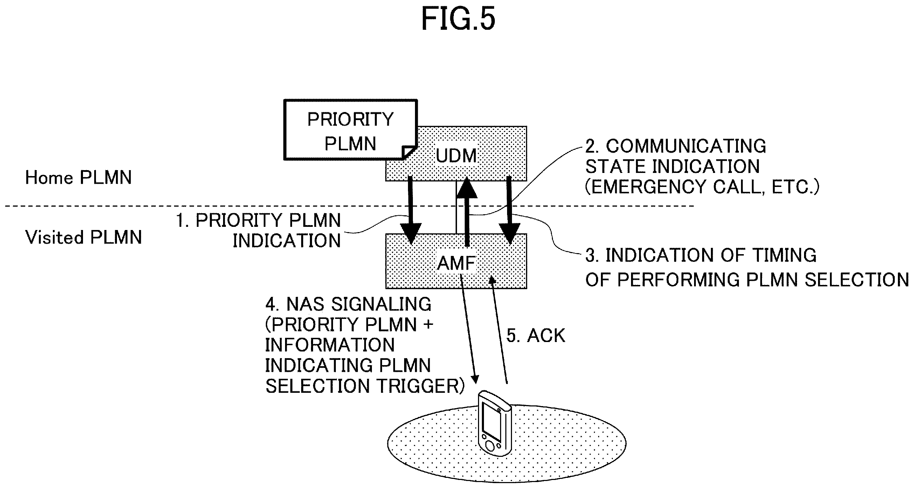

Fig. 5 is a diagram illustrating an example (2) of a SoR processing method according to an embodiment of the present invention. In the example illustrated in Fig. 4, the timing of performing the PLMN selection is controlled by the UE, based on the call type in the communicating state. On the other hand, in an example illustrated in Fig. 5, the above-described timer value of 1) or the flag of 2) are configured by the network by determining the call type in the communicating state. The UDM in the HPLMN determines, for example, the call type in the communicating state, and configures the appropriate timer value or the flag indicating whether to allow the PLMN selection during the communication.

As illustrated in Fig. 5, in step 1, the UDM in the HPLMN transmits, to the AMF in the VPLMN, the priority PLMN as SoR information. Subsequently, in step 2, the AMF transmits, to the UDM, an indication related to the communicating state. Subsequently, in step 3, based on the received indication related to the communication state, the UDM determines the timing for performing the PLMN selection, and transmits, to the AMF, an indication of the timing for performing the PLMN selection. The indication of the timing for performing the PLMN selection corresponds to information indicating the PLMN selection trigger. Subsequently, in step 4, the AMF transmits the priority PLMN and the information indicating the PLMN selection trigger that are received from the UDM to the UE via the NAS signaling. Subsequently, in step 5, in response to the reception of the priority PLMN and the information indicating the PLMN selection trigger, the UE transmits an ACK to the AMF.

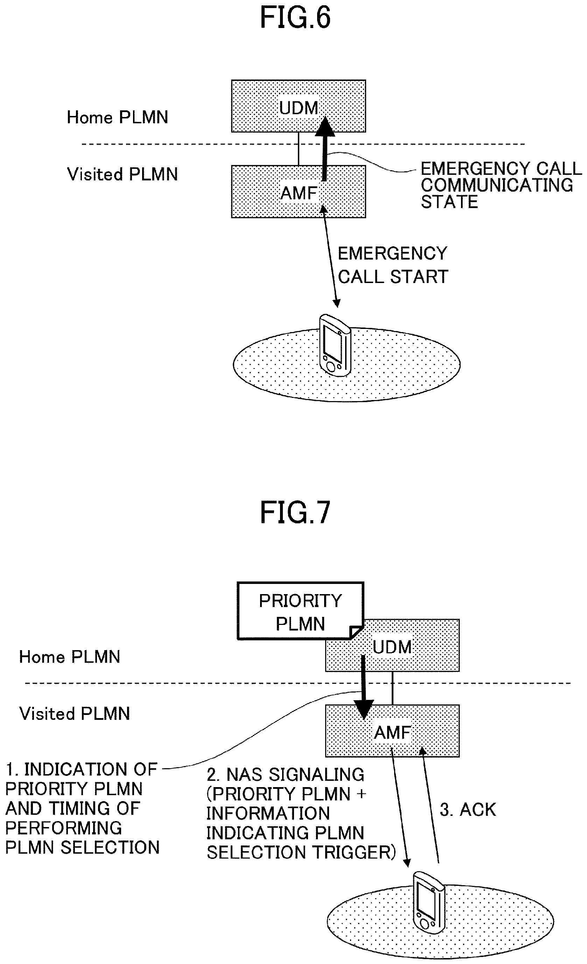

Fig. 6 is a diagram illustrating an example (3-1) of a SoR processing method according to an embodiment of the present invention. Fig. 7 is a diagram illustrating an example (3-2) of a SoR processing method according to an embodiment of the present invention. Fig. 6 and Fig. 7 are examples in which the AMF in the VPLMN indicates, to the UDM in the HPLMN, the communicating state every time the communicating state changes, and indicates the priority PLMN and the timing of performing the PLMN selection when transmitting the SoR information.

As illustrated in Fig. 6, when the UE starts an emergency call, the AMF in the VPLMN transmits, to the UDM in the HPLMN, information indicating the emergency call communicating state.

As illustrated in Fig. 7, in step 1, the UDM in the HPLMN transmits, to the AMF in the VPLMN, the priority PLMN and the timing of performing the PLMN selection as the SoR information. As illustrated in Fig. 6, the UDM determines the timing of performing the PLMN selection, based on the indication related to the communicating state that has already been received. The indication of the timing of performing the PLMN selection corresponds to the information indicating the PLMN selection trigger. Subsequently, in step 2, the AMF transmits the priority PLMN and the information indicating the PLMN selection trigger that are received from the UDM to the UE via the NAS signaling. Subsequently, in step 3, in response to the reception of the priority PLMN and the information indicating the PLMN selection trigger, the UE transmits an ACK to the AMF.

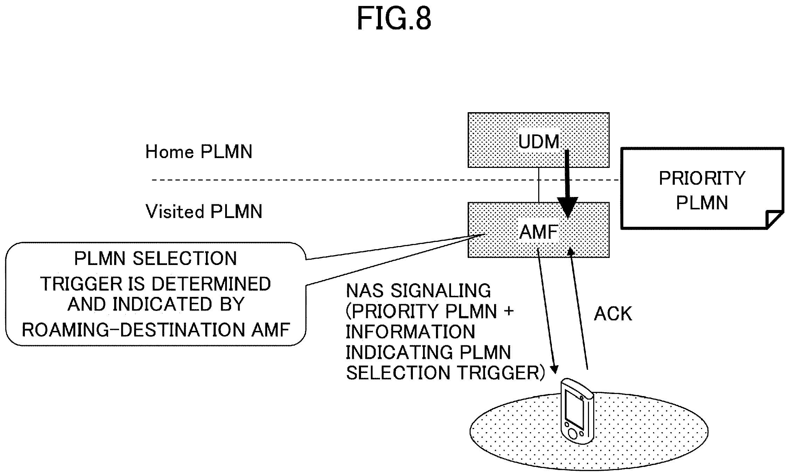

Fig. 8 is a diagram illustrating an example (4) of a SoR processing method according to an embodiment of the present invention. The network determines the communicating call type, and configures the timer value of 1) described above, or the flag of 2) described above. The AMF in the VPLMN determines, for example, the call type in the communicating state, and configures the appropriate timer value or the flag indicating whether to allow the PLMN selection during the communication.

As illustrated in Fig. 8, the communicating call type may be determined by the AMF in the VPLMN, and the AMF in the VPLMN may determine the PLMN selection trigger. The AMF transmits the priority PLMN received from the UDM and the information indicating the PLMN selection trigger determined by the AMF to the UE via the NAS signaling. Subsequently, in response to the reception of the priority PLMN and the information indicating the PLMN selection trigger, the UE transmits an ACK to the AMF.

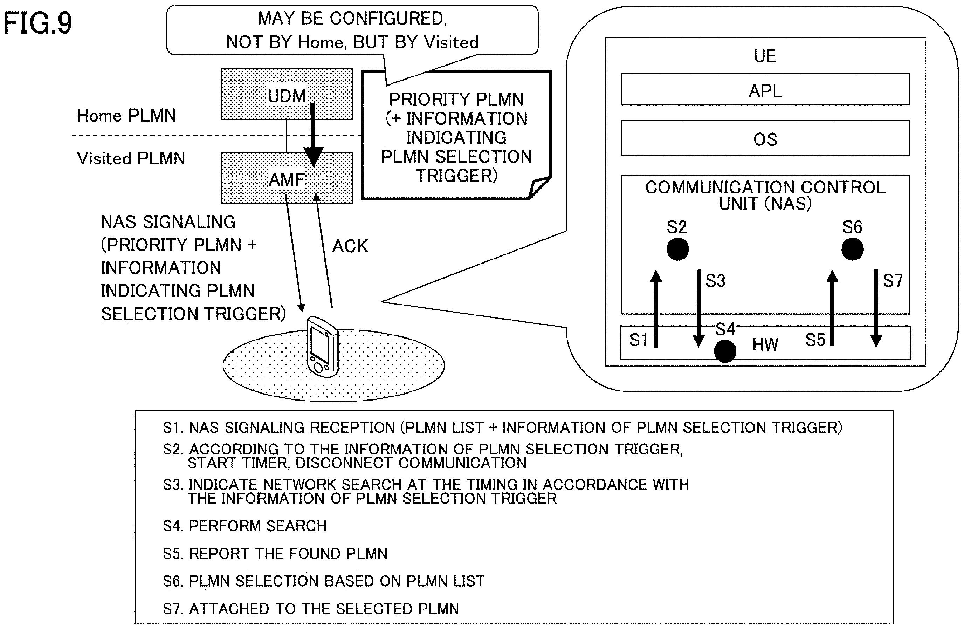

Fig. 9 is a diagram illustrating an example (5) of a SoR processing method according to an embodiment of the present invention. As illustrated in Fig. 9, an operation as a communication system, and a UE internal process will be described. According to an embodiment of the present invention, a communication system is implemented in which, not only the priority PLMN, but also the information indicating the PLMN selection trigger is indicated to the UE.

For example, the following a), b), and c) are implemented in the communication system according to an embodiment of the present invention.
a) The network indicates, to the UE, information related to the PLMN selection trigger in each communication state, and the UE determines whether to perform the PLMN selection.
b) The AMF in the VPLMN indicates the communication state to the UDM in the HPLMN, and the UDM indicates an appropriate PLMN selection trigger to the UE.
c) The AMF in the roaming destination network, such as the VPLMN, indicates an appropriate PLMN selection trigger to the UE, based on the communication state.

In the following, an operation of a functional unit in the UE will be described. The HW (hardware) corresponds to the transmission unit 210 or the reception unit 220. The communication control unit, OS (Operating System), or APL (Application) corresponds to the control unit 240. In step S1 illustrated in Fig. 9, the HW receives NAS signaling and transmits the NAS signaling to the communication control unit. Subsequently, the communication control unit starts a timer, and disconnects communication, according to the PLMN selection trigger information (S2). Subsequently, the communication control unit transmits, to the HW, a network search indication at the timing in accordance with the PLMN selection trigger information (S3). Subsequently, the HW performs the search (S4). Subsequently, the HW reports the found PLMN to the communication control unit (S5). Subsequently, the communication control unit performs PLMN selection, based on the PLMN list (S6). Subsequently, the communication control unit transmits, to the HW, an indication to be attached to the selected PLMN (S7).

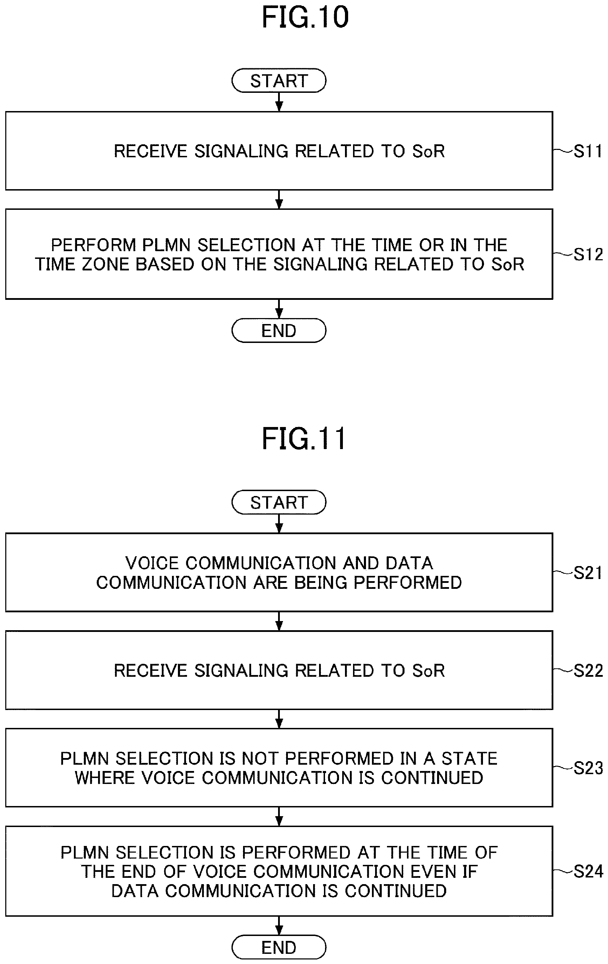

Fig. 10 is a flowchart illustrating an example (6) of a SoR processing method according to an embodiment of the present invention. For example, as an example of a behavior of an IoT (Internet of Things) device, an operation is assumed in which communication is performed at a specific time or a report is transmitted at a specific time. Accordingly, the SoR process may be performed by avoiding the time at which the SoR target UE is assumed to perform communication, by specifying the date and time and/or period at which the SoR process is to be performed.

In step S11, the UE receives the signaling related to SoR. The signaling related to SoR may be NAS signaling including at least the priority PLMN and the information indicating the PLMN selection trigger as described above.

In subsequent step S12, the UE performs PLMN selection at the time or time zone based on the received signaling related to SoR. In other words, the signaling related to SoR may include, as the information indicating the PLMN selection trigger, information specifying the time at which the PLMN selection is to be performed. The information may specify any time or period, and may be, for example, an indication to perform PLMN selection according to SoR every day at 13:20.

In addition, the signaling related to SoR may include, as the information indicating the PLMN selection trigger, information specifying the date and time at which the PLMN selection is to be performed. The information may be, for example, an indication to perform PLMN selection according to SoR at 13:20, January 31, 2021.

In addition, the signaling related to SoR may include, as the information indicating the PLMN selection trigger, information specifying the and time zone and/or period at which the PLMN selection is to be performed. The information may be, for example, an indication to perform PLMN selection according to SoR during the time between 1:00 to 5:00. Further, the information may be, for example, an indication to perform PLMN selection according to SoR, every day during the time between 1:00 to 5:00.

In addition, the signaling related to SoR may include, as the information indicating the PLMN selection trigger, information specifying the time zone and/or period at which the PLMN selection is not to be performed. The information may be, for example, an indication not to perform PLMN selection according to SoR, every day during the time between 0:00 to 1:00.

Fig. 11 is a flowchart illustrating an example (7) of a SoR processing method according to an embodiment of the present invention. In step S21, the UE is performing voice communication and data communication. In subsequent step S22, the UE receives the signaling related to SoR. The signaling related to SoR may be NAS signaling including at least the priority PLMN and the information indicating the PLMN selection trigger as described above.

In subsequent step S23, the UE is not required to performing PLMN selection while the voice communication is being continued. In subsequent step S24, the UE may perform PLMN selection after the end of the voice communication, even if the data communication is being continued. Further, in step S24, the UE may perform PLMN selection after the end of the voice communication, regardless of the data communicating state.

Note that, the UE need not perform PLMN selection when the voice communication is being continued, based on the received information indicating the PLMN selection trigger, or the UE need not perform PLMN selection when the voice communication is being continued, according to other configurations or pre-defined specifications. In addition, the UE may perform PLMN selection at the end of the voice communication even when the data communication is being continued, based on the received information indicating the PLMN selection trigger, or the UE may perform PLMN selection at the end of the voice communication even when the data communication is being continued, according to other configurations or pre-defined specifications.

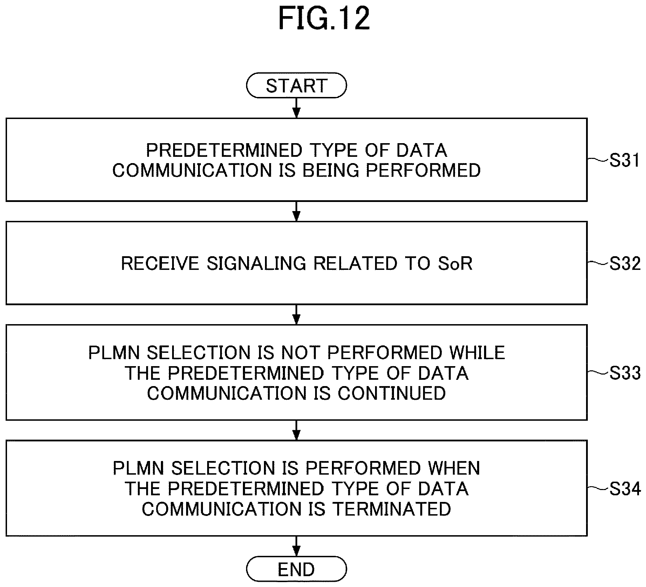

Fig. 12 is a flowchart illustrating an example (8) of a SoR processing method according to an embodiment of the present invention. In step S31, the UE is performing a predetermined type of data communication. The predetermined type of data communication may be communication related to remote medical care, may be communication related to V2X, and may be communication related to vehicle communication, for example. In addition, any type of data communication may be configured as the predetermined type of data communication.

In subsequent step S32, the UE receives the signaling related to SoR. The signaling related to SoR may be NAS signaling including at least the priority PLMN and the information indicating the PLMN selection trigger as described above. The information indicating the PLMN selection trigger may include information specifying the predetermined type of data communication.

In subsequent step S33, the UE need not perform PLMN selection during the time when predetermined type of data communication is being continued. Note that, the PLMN selection need not be performed during the time when the predetermined type of data communication is being continued, based on the received information indicating the PLMN selection trigger, or the PLMN selection need not be performed during the time when the predetermined type of data communication is being continued, according to other configurations or pre-defined specifications. Note that, in a case where the signaling related to SoR is received, the UE may be configured to be in a state of not performing the PLMN selection for a freely-selected period.

In subsequent step S34, the UE may perform PLMN selection at the time when the predetermined type of data communication is ended.

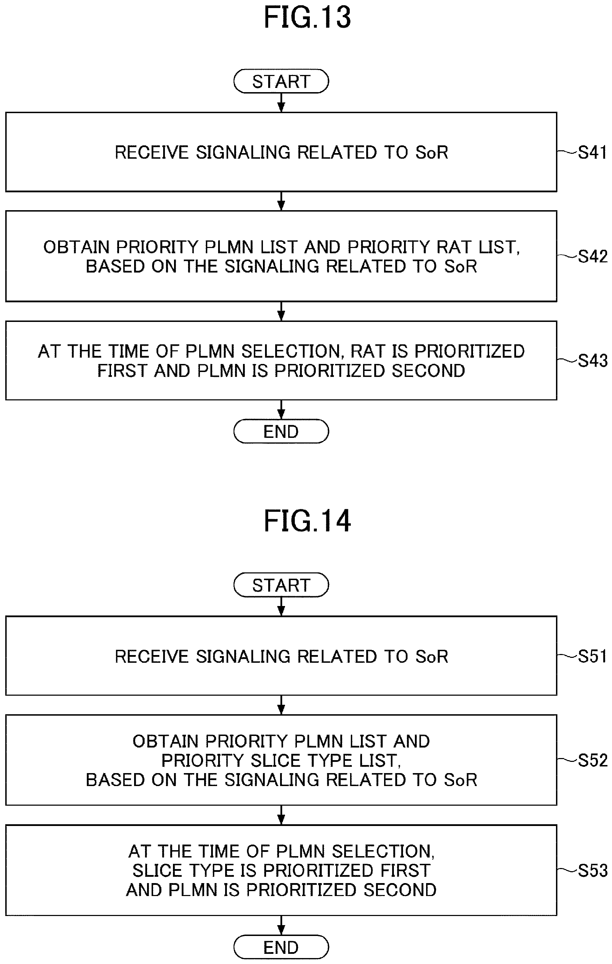

Fig. 13 is a flowchart illustrating an example (9) of a SoR processing method according to an embodiment of the present invention. In step S41, the UE receives the signaling related to SoR. The signaling related to SoR may be NAS signaling including at least the priority PLMN and the information indicating the PLMN selection trigger as described above. In addition, the signaling related to SoR may include a priority PLMN list and a priority RAT list. In other words, the network may configure the priority PLMN list and the priority RAT list to the signaling related to SoR. Note that the list may be formed with one entry.

In subsequent step S42, the UE may obtain the priority PLMN list and the priority RAT list, based on the signaling related to SoR. In subsequent step S43, the UE may prioritize the RAT first, and prioritize the PLMN second. For example, in a case where the prioritized RAT does not exist in the highest-rank PLMN in the priority PLMN list and where the prioritized RAT exists in another PLMN, the UE may select the another PLMN.

Note that, in step S43, the UE may prioritize the PLMN first, and prioritize the RAT second.

Fig. 14 is a flowchart illustrating an example (10) of a SoR processing method according to an embodiment of the present invention. In step S51, the UE receives the signaling related to SoR. The signaling related to SoR may be NAS signaling including at least the priority PLMN and the information indicating the PLMN selection trigger as described above. In addition, the signaling related to SoR may include a priority PLMN list and a priority slice type list. In other words, the network may configure the priority PLMN list and the priority slice type list to the signaling related to SoR. Note that the list may be formed with one entry.

Note that the slice type may be eMBB (enhanced Mobile Broadband), may be URLCC (Ultra-Reliable and Low Latency Communications), may be mMTC (massive Machine Type Communications), may be V2X, and may be IoT.

In subsequent step S52, the UE may obtain the priority PLMN list and the priority slice type list, based on the signaling related to SoR. In subsequent step S53, the UE may prioritize the slice type first, and prioritize the PLMN second. For example, in a case where the prioritized slice type does not exist in the highest-rank PLMN in the priority PLMN list and where the prioritized slice type exists in another PLMN, the UE may select the another PLMN.

Note that, in step S53, the UE may prioritize the PLMN first, and prioritize the slice type second.

Note that the specified PLMN type may be NPN (Non-Public Network).

Note that the information that can be specified by the priority PLMN list may be information indicating Non-3GPP Access (e.g., WLAN, WiMax (registered trademark), fixed network) other than the 3GPP access specified by information such as, RAT type, PLMN ID, or the like.

In addition, a SoR processing method described below may be performed in an embodiment of the present invention. The UE receives the signaling related to SoR. The signaling related to SoR may be NAS signaling including at least the priority PLMN and the information indicating the PLMN selection trigger as described above. In addition, the signaling related to SoR may include information related to capabilities that are specified by UE Network Capability or UE Radio Capability. In other words, the network may configure the priority PLMN list and the priority UE Network Capability or UE Radio Capability to the signaling related to SoR. Note that the list may be formed with one entry.

Subsequently, the UE may obtain, based on the signaling related to SoR, the priority PLMN list and the UE Network Capability or UE Radio Capability of the residing area network. Subsequently, the UE may prioritize the UE Network Capability or UE Radio Capability first, and prioritize the PLMN second. For example, in a case where the capability specified by the prioritized UE Network Capability or UE Radio Capability does not exist in the highest-rank PLMN in the priority PLMN list and where the capability specified by the prioritized UE Network Capability or UE Radio Capability exists in another PLMN, the UE may select the another PLMN. Note that the UE may prioritize the PLMN first, and prioritize the UE Network Capability or UE Radio Capability second.

According to the above-described embodiment, the AMF as the network node can indicate the information related to the PLMN selection trigger to the UE, and thus, the AMF can control in detail the timing at which the UE performs PLMN selection. In addition, the AMF as the network node can cause the UE to select the PLMN that includes the prioritized RAT or the prioritized slice type, by indicating information indicating the prioritized RAT or the prioritized slice type to the UE.

In other words, the network selection trigger of the user device under the roaming environment, or the network to be selected, can be controlled.

### (Apparatus configuration)

Next, a functional configuration example of the network node 10 and the user device 20 for performing processes and operations described above will be described. The network node 10 and the user device 20 include functions for implementing the embodiments described above. It should be noted, however, that each of the network node 10 and the user device 20 may include only some of the functions in an embodiment.

### <Network node 10>

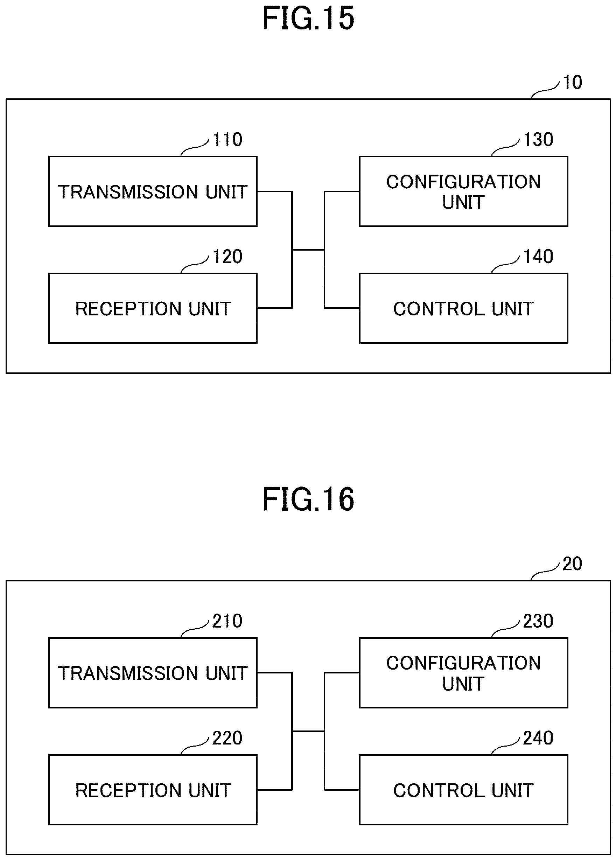

Fig. 15 is a diagram illustrating an example of a functional configuration of the network node 10. As illustrated in Fig. 15, the network node 10 includes a transmission unit 110, a reception unit 120, a configuration unit 130, and a control unit 140. The functional structure illustrated in Fig. 15 is merely an example. Functional divisions and names of functional units may be anything as long as operations according to an embodiment of the present invention can be performed. In addition, the network nodes 10 having multiple different functions in the system architecture may be composed of multiple network nodes 10 separated for each function.

The transmission unit 110 includes a function for generating a signal to be transmitted to the user device 20 or to another network node 10 and for transmitting the signal in a wired manner or wireless manner. The reception unit 120 includes a function for receiving various signals transmitted from the user device 20 or another network node 10, and for obtaining, for example, information of an upper layer from the received signals.

The configuration unit 130 stores, in the storage device, preset configuration information and various configuration information items to be transmitted to the user apparatus 20, and reads them from the storage device if necessary. Contents of the configuration information are, for example, the subscriber information of the user device 20 and the SoR information.

The control unit 140 performs a process related to the communication control of the user device 20 under the roaming environment, as described in an embodiment of the present invention. Further, the control unit 140 performs a process related to SoR information indication to the user device 20. The functional units related to signal transmission in the control unit 140 may be included in the transmission unit 110, and the functional units related to signal reception in the control unit 140 may be included in the reception unit 120.

### <User apparatus 20>

Fig. 16 is a drawing illustrating an example of a functional structure of a user apparatus 20. As illustrated in Fig. 16, the user apparatus 20 includes a transmission unit 210, a reception unit 220, a configuration unit (setting unit) 230, and a control unit 240. The functional structure illustrated in Fig. 16 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function of receiving NR-PSS, NR-SSS, NR-PBCH, DL/UL control signals, or reference signals transmitted from the network node 10.

The configuration unit 230 stores various types of configuration information received from the network node 10 by the reception unit 220 in the storage device and reads the configuration information from the storage device as necessary. In addition, the configuration unit 230 stores pre-configured configuration information. Contents of the configuration information are, for example, the subscriber information and the SoR information.

The control unit 240 performs a process related to communication control at the time of roaming environment, based on the SoR information, as described in the embodiments. Further, the control unit 240 performs a process related to PLMN switching control at the time of SoR information reception. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 15 and Fig. 16), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e. g. , wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

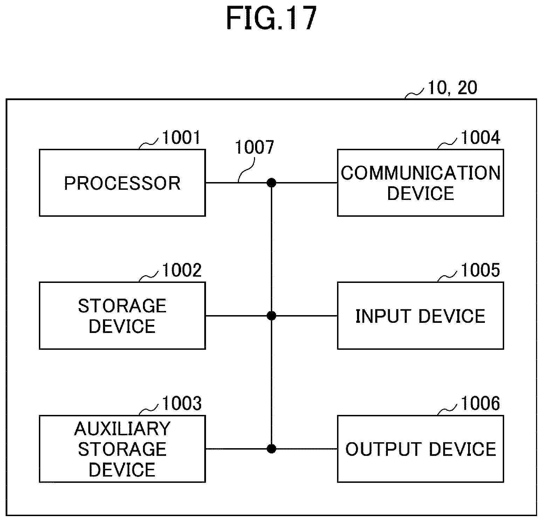

For example, the network node 10, the user device 20, etc., according to an embodiment of the present disclosure may function as a computer for processing the radio communication method of the present disclosure. Fig. 17 is a drawing illustrating an example of hardware structures of the network node 10 and the user device 20 according to an embodiment of the present invention. Each of the above-described network node 10 and the user device 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the network node 10 and the user device 20 may include one or more of each of the devices illustrated in the figure, or need not include some devices.

Each function in the network node 10 and the user device 20 is implemented by reading out software (programs) onto the hardware such as the processor 1001, the storage device 1002, etc., so that the processor 1001 performs calculations and controls communication by the communication device 1004, or controls at least one of reading data and writing data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the network node 10 illustrated in Fig. 15 may be realized by control programs that are stored in the storage device 1002 and are executed by the processor 1001. Further, for example, the control unit 240 of the user apparatus 20 illustrated in Fig. 16 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e. g. , compact disk, digital versatile disk, Blu-ray (registered trademark) disk), a smart card, a flash memory (e. g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e. g. , keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the devices including the processor 1001, the storage device 1002, etc., are connected to each other via the bus 1007 used for communicating information. The bus 1007 may include a single bus, or may include different buses between the apparatuses.

Further, the network node 10 and the user device 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be implemented by the hardware. For example, the processor 1001 may be implemented by at least one of the above hardware elements.

### (Embodiment summary)

As described above, according to an embodiment of the present invention, a terminal is provided. The terminal includes: a reception unit configured to receive, from a first network node in a VPLMN (Visited Public land mobile network), signaling related to SoR including at least information indicating a prioritized PLMN and information indicating a trigger of a PLMN selection; and a control unit configured to perform the PLMN selection, based on the information indicating the prioritized PLMN and the information indicating the trigger of the PLMN selection. The signaling related to SoR is generated by a second network node in a HPLMN (Home Public land mobile network).

According to the above configuration, the AMF as the network node can indicate information related to the PLMN selection trigger to the UE, and can control in detail the timing at which the UE performs PLMN selection. In addition, the AMF as the network node can cause the UE to select the PLMN that includes the prioritized RAT or the prioritized slice type, by indicating information indicating the prioritized RAT or the prioritized slice type to the UE. In other words, the network selection trigger of the user device under the roaming environment, or the network to be selected, can be controlled.

The control unit may perform the PLMN selection at a time or period specified by the information indicating the trigger of the PLMN selection. According to the above configuration, the AMF as the network node can indicate information related to the PLMN selection trigger to the UE, and can control in detail the timing at which the UE performs PLMN selection. In other words, the UE can perform PLMN selection at the timing at which the UE is not supposed to be performing communications.

In a case where voice communication and data communication are being performed, the control unit need not perform the PLMN selection during the voice communication, and may perform the PLMN selection at an end of the voice communication regardless of a performing state of the data communication. According to the above configuration, the AMF as the network node can indicate information related to the PLMN selection trigger to the UE, and can control in detail the timing at which the UE performs PLMN selection.

The control unit need not perform the PLMN selection when a specific type of the data communication is being performed. According to the above configuration, the AMF as the network node can indicate information related to the PLMN selection trigger to the UE, and can control in detail the timing at which the UE performs PLMN selection. In other words, the UE can withhold the PLMN selection while performing important data communication, the disconnection of the important data communication being a significant problem.

The reception unit may receive the signaling related to SoR further including information indicating a prioritized RAT (Radio Access Technology) or a prioritized slice type, and the control unit may perform the PLMN selection by prioritizing the prioritized RAT or prioritized slice type first, and prioritizing the prioritized PLMN second. The AMF as the network node can cause the UE to select the PLMN that includes the prioritized RAT or the prioritized slice type, by indicating information indicating the prioritized RAT or the prioritized slice type to the UE.

In addition, according to an embodiment of the present invention, a communication system comprising: a first network node in a VPLMN (Visited Public land mobile network) ; a second network node in a HPLMN (Home Public land mobile network) ; and a terminal, is provided. The second network node includes: a transmission unit configured to transmit, to the first network node, signaling related to SoR including at least information indicating a prioritized PLMN and information indicating a trigger of PLMN selection, and the first network node includes: a reception unit configured to receive, from the second network node, the signaling related to SoR; and a transmission unit configured to transmit, to the terminal, the signaling related to SoR, and the terminal includes: a reception unit configured to receive, from the first network node, the signaling related to SoR; and a control unit configured to perform the PLMN selection, based on the information indicating the prioritized PLMN and the information indicating the trigger of the PLMN selection.

According to the above configuration, the AMF as the network node can indicate information related to the PLMN selection trigger to the UE, and can control in detail the timing at which the UE performs PLMN selection. In addition, the AMF as the network node can cause the UE to select the PLMN that includes the prioritized RAT or the prioritized slice type, by indicating information indicating the prioritized RAT or the prioritized slice type to the UE. In other words, the network selection trigger of the user device under the roaming environment, or the network to be selected, can be controlled.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and a thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, each of the network node 10 and the user device 20 has been described by using functional block diagrams. However, these devices may be implemented by hardware, software, or a combination of hardware and software. The software executed by a processor included in the network node 10 according to an embodiment of the present invention and the software executed by a processor included in the user device 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e. g., DCI (Downlink Control Information), UCI (Uplink Control Information)), upper layer signaling (e. g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802. 11 (Wi-Fi (registered trademark)), IEEE 802. 16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the network node 10 in the present specification, may be performed by an upper node in some cases. In a network including one or more network nodes including the network node 10, it is apparent that various operations performed for communicating with the user device 20 may be performed by at least one of the network node 10 and another network node other than the network node 10 (for example, but not limited to, MME or S-GW). According to the above, a case is described in which there is another single network node other than the network node 10. However, the other network node may be a combination of multiple other network nodes (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB) ", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e. g., three) cells. In the case where the base station accommodates a plurality of cells, the entire coverage area of the base station may be divided into a plurality of smaller areas, each smaller area may provide communication services by means of a base station subsystem (e.g. , an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g. , a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple user apparatuses 20 (e. g. , may be referred to as D2D (Device-to-Device), V2X (Vehicle-to-Everything), etc.). In this case, a function of the network node 10 described above may be provided by the user device 20. Further, the phrases "up" and "down" may also be replaced by the phrases corresponding to terminal-to-terminal communication (e. g. , "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e. g., receiving information), "transmitting" (e.g., transmitting information), "inputting", "outputting", or "accessing" (e. g. , accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "determination" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e. g., by not performing notification (transmission/reporting) of the predetermined information).

Note that the AMF in the present disclosure is an example of the first network node. The UDM is an example of the second network node.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Network node
110 Transmission unit
120 Reception unit
130 Configuration unit
140 Control unit
20 User apparatus
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive, from a first network node in a VPLMN (Visited Public land mobile network), signaling related to SoR including at least information indicating a prioritized PLMN and information indicating a trigger of a PLMN selection; and
a control unit configured to perform the PLMN selection, based on the information indicating the prioritized PLMN and the information indicating the trigger of the PLMN selection, wherein
the signaling related to SoR is generated by a second network node in a HPLMN (Home Public land mobile network).

2. The terminal as claimed in claim 1, wherein
the control unit performs the PLMN selection at a time or period specified by the information indicating the trigger of the PLMN selection.

3. The terminal as claimed in claim 1, wherein
in a case where voice communication and data communication are being performed, the control unit does not perform the PLMN selection during the voice communication, and performs the PLMN selection at an end of the voice communication regardless of a performing state of the data communication.

4. The terminal as claimed in claim 1, wherein
the control unit does not perform the PLMN selection when a specific type of the data communication is being performed.

5. The terminal as claimed in claim 1, wherein
the reception unit receives the signaling related to SoR further including information indicating a prioritized RAT (Radio Access Technology) or a prioritized slice type, and
the control unit performs the PLMN selection by prioritizing the prioritized RAT or the prioritized slice type first and prioritizing the prioritized PLMN second.

6. A communication system comprising: a first network node in a VPLMN (Visited Public land mobile network); a second network node in a HPLMN (Home Public land mobile network); and a terminal, wherein
the second network node includes:
a transmission unit configured to transmit, to the first network node, signaling related to SoR including at least information indicating a prioritized PLMN and information indicating a trigger of PLMN selection, and
the first network node includes:
a reception unit configured to receive, from the second network node, the signaling related to SoR; and
a transmission unit configured to transmit, to the terminal, the signaling related to SoR, and
the terminal includes:
a reception unit configured to receive, from the first network node, the signaling related to SoR; and
a control unit configured to perform the PLMN selection, based on the information indicating the prioritized PLMN and the information indicating the trigger of the PLMN selection.
